# EUROPEAN PATENT APPLICATION

(11) **EP 0 697 171 A1**
(43) Date of publication of application: **21.02.1996**
(21) Application number: 95304625.7
(22) Date of filing: 30.06.1995
(51) Int. Cl.: A01N 25/30, A01N 59/16, A01N 47/14, A01N 43/84, A01N 43/653, A01N 43/54

(54) **Novel agrochemical suspoemulsion**

(30) Priority: 12.07.1994 GB 9413980
(71) Applicant: ROHM AND HAAS COMPANY, Philadelphia, Pennsylvania 19106-2399 (US)
(72) Inventor: Bouzekri, Mohamed, F-67850 Herrlisheim (FR)
(74) Representative: Tanner, James Percival

(57) **Abstract**

The present invention provides an aqueous-based suspoemulsion comprising as suspended solid component a dithiocarbamate, and as emulsified component a triazole, morpholine or pyrimidine, and wherein the suspoemulsion also comprises a polymer of propylene oxide and ethylene oxide. The suspoemulsion is sufficiently stable to be commercially useful.

## Description

The present invention relates to combinations of agricultural chemicals, generally fungicides, and more specifically to mixtures including as one active ingredient a dithiocarbamate such as mancozeb or maneb.

Fungicides are often sprayed onto crops in combination, either for reasons of ease of application or because the particular combination is synergistic. For reasons of both safety and ease of use, it is clearly desirable where possible to provide farmers with a ready mixed liquid formulation of the two or more active ingredients, which can simply be put into a tank and then sprayed. However not all combinations are compatible, or stable over long periods, and consequently it is necessary in many cases to mix the active ingredients immediately prior to application.

An example of this is the combination of the zinc salt of ethylene bisdithiocarbamate (mancozeb) (sold under the trade mark DITHANE by Rohm and Haas Company) with other fungicides, such as fenbuconazole (sold under the trade mark INDAR by Rohm and Haas Company). Conventional wettable powders of mancozeb and fenbuconazole do not remain fungicidally active for extended periods of time, due it is believed to interaction of the zinc with nitrogen in the triazole ring. Consequently when it is desired to spray a mixture of the two fungicides, it is necessary for the farmer to mix the two on site, which as indicated above is preferably avoided.

One solution to the above problem is to form a suspoemulsion of the two components. A suspoemulsion (SE) is a combination of an emulsion concentrate (EC) of one component with a suspension concentrate (SC) of the other. An EC is an oil-in-water emulsion where the active ingredient is dissolved in the oil. An SC is a suspension of the other active ingredient in water. When the two are mixed, the water carries oil droplets containing one active ingredient intermingled with suspended particles of the other. Generally the SC - and hence the resulting SE - additionally contains other components such as a dispersant to aid the stability of the suspension and hence of the whole system. The advantage of such a formulation over simple mixtures is that the two components can be chemically isolated from one another, thereby preventing interactions which may lead to breakdown of the system. As a consequence a ready-mixed liquid formulation can be supplied to the farmer for immediate application.

In the particular case of fungicide mixtures involving mancozeb, suspoemulsions have not been employed because hitherto they too have proved to be unstable, breaking down into separate phases after a relatively short time. Many different dispersants have been tried in an attempt to produce a stable suspoemulsion containing mancozeb, but until now a stable system has not been found.

However we have now found a suspoemulsion containing mancozeb or maneb which is sufficiently stable to be commercially useful, and which is as fungicidally effective as the corresponding tank mix. Accordingly the present invention provides in a first aspect an aqueous-based suspoemulsion comprising as suspended solid component a dithiocarbamate, and as emulsified component a triazole, morpholine or pyrimidine, characterised in that it also comprises a polymer of propylene oxide and ethylene oxide, the polymer having at least 40 mol% polyoxyethylene (EO) units, a central polyoxypropylene (PO) portion, and the formula HO(CH₂CH₂O)ₓ(CH(CH₃)CH₂O)_{y}(CH₂CH₂O)_{z}H, where x, y, and z are such that the molecular mass of said portion is at least 1200. The polymer is believed to impart the stability to the system, which is particularly surprising in view of the failure of other chemically similar dispersants to do so.

In a further aspect the invention provides a method of stabilising a suspoemulsion of dithiocarbamate as suspended solid component and triazole, morpholine or pyrimidine as emulsified component, comprising incorporating therewith a polymer of propylene oxide and ethylene oxide, the polymer having at least 40 mol% polyoxyethylene units, a central polyoxypropylene portion, and the formula HO(CH₂CH₂O)ₓ(CH(CH₃)CH₂O)_{y}(CH₂CH₂O)_{z}H, where x, y, and z are such that the molecular mass of said portion is at least 1200.

The polymer preferably contains 70 to 90 mol% polyoxyethylene units. The central polyoxypropylene portion preferably has a molecular mass of from 1500 to 2000. The polymer preferably has a polyoxypropylene molecular mass of approximately 1750. The polymer preferably comprises approximately 80% polyoxyethylene units. The most preferred polymer has a polyoxypropylene molecular mass of approximately 1750, and approximately 80% polyoxyethylene units, and is sold as a dispersant under the trade mark PLURONIC 6800.

Preferably the polymer is present in an amount of from 0.1 to 10% by weight of the suspoemulsion, more preferably from 1 to 5% by weight. Generally the dithiocarbamate is present at a concentration of from 50 to 1000 g/l, preferably from 200 to 600 g/l. Generally, the emulsified component, which may comprise more than one active ingredient, is at a concentration of from 1 to 100 g/l, preferably from 5 to 20 g/l.

The dithiocarbamate is preferably manganese ethylene bisdithiocarbamate (maneb) or its coordination product with zinc ion (mancozeb). It may also be ferric dithiocarbamate (ferbam), zinc dimethyldithiocarbamate (ziram), zinc ethylene bisdithiocarbamate (zineb), zinc propylene bisdithiocarbamate (propineb), sodium methyldithiocarbamate (metham), tetramethylthiuram disulphide (thiram), the complex of zineb and polyethylene thiuram disulphide, 3,5-dimethyl-1,3,5-2H-tetrahydrothiadiazine-2-thione (dazomet), or mixtures of the above with copper salts.

The emulsified component preferably includes or is a triazole, more preferably 4-(4-chlorophenyl)-2-phenyl-2-((1H-1,2,4-triazol-1-yl)methyl)butanenitrile. An alternative is the related compound fenpropidin. In one embodiment the emulsified component comprises fenbuconazole and/or fenpropidin.

The suspoemulsion of the invention may be produced in a known manner. A stable aqueous slurry of the dithiocarbamate compound is obtained (eg mancozeb, commercially available as DITHANE FLO from Rohm and Haas) or prepared by known methods. The emulsified component is prepared by mixing the active ingredient in a mixture of solvents and adding emulsifier. The two components are then combined with water and the EO/PO polymer dispersant, and if desired the viscosity adjusted with a thickener.

### EXAMPLES

The following Examples illustrate suspoemulsions made using a variety of dispersants, including one within the scope of the invention.

### EXAMPLE 1 - Suspoemulsion preparation

All the suspoemulsions were made according to the following procedure:

### a) Emulsion Concentrate

The emulsifiable active ingredient such as fenbuconazole (INDAR Technical at 96% active ingredient, available from Rohm and Haas Company) was added to a mixture of the following solvents at room temperature:
N-methyl pyrrolidone, N-octyl pyrrolidone, cyclohexyl-1-pyrrolidone; or
SOLVESSO 200, a mixture of paraffinic, isoparaffinic, cycloparaffinic and aromatic hydrocarbons.

It was allowed to stand for 30 minutes before addition of emulsifiers under stirring. The emulsifiers were a mixture of anionic and non-ionic surfactants sold under the trade mark SPONTO (Witco Company).

### b) Suspension Concentrate

A dispersant, lignosulphate sodium, was first dissolved in water, and a wet cake of maneb added. The mixture was stirred to obtain a homogeneous slurry. There were then added zinc sulphate to convert the maneb to mancozeb; a complexing agent to improve the physical stability of the composition; an antifoam; and a thickener. All the ingredients were mixed under strong agitation before being wet grinded on a Dynomil grinder.

### c) Suspoemulsion

Into a tank containing the SC prepared in b) above were added under agitation water, the EC from a) above, and the dispersant. The final viscosity was adjusted with a 2% thickener solution. The properties of a typical SE were as follows:
Viscosity: less than 1000 cps
Wet sieve retention on 45 um: less than 0.5%
Particle size distribution: 1-3 um
Flocculation test: None observable by visual examination
Suspensibility: 90% minimum

### EXAMPLE 2 - Stability testing for various dispersants

Suspoemulsions containing fenbuconazole as EC active ingredient and mancozeb as SC active ingredient were prepared with a large number of different dispersants. They were evaluated for stability according to the following test:

A formulation containing 71.8 wt% mancozeb as SC, 25.9 wt% fenbuconazole as EC, 0.8 wt% water and 1.5 wt% dispersant was prepared. This was stored for 2 weeks at 54°C and then evaluated for stability. If the oil and water phases had separated, the formulation was considered unstable.

The results are shown in Table 1. They clearly show that as a general rule it is impossible to achieve a satisfactorily stable suspoemulsion of mancozeb and fenbuconazole with almost any dispersant. The single exception which was found to work was Pluronic 6800; even very similar dispersants such as Pluronic 3100 and 4300 (which differ only in that they have a different polyoxypropylene molecular mass and a different percentage of polyoxyethylene units) failed, which makes the success of Pluronic 6800 particularly unexpected.

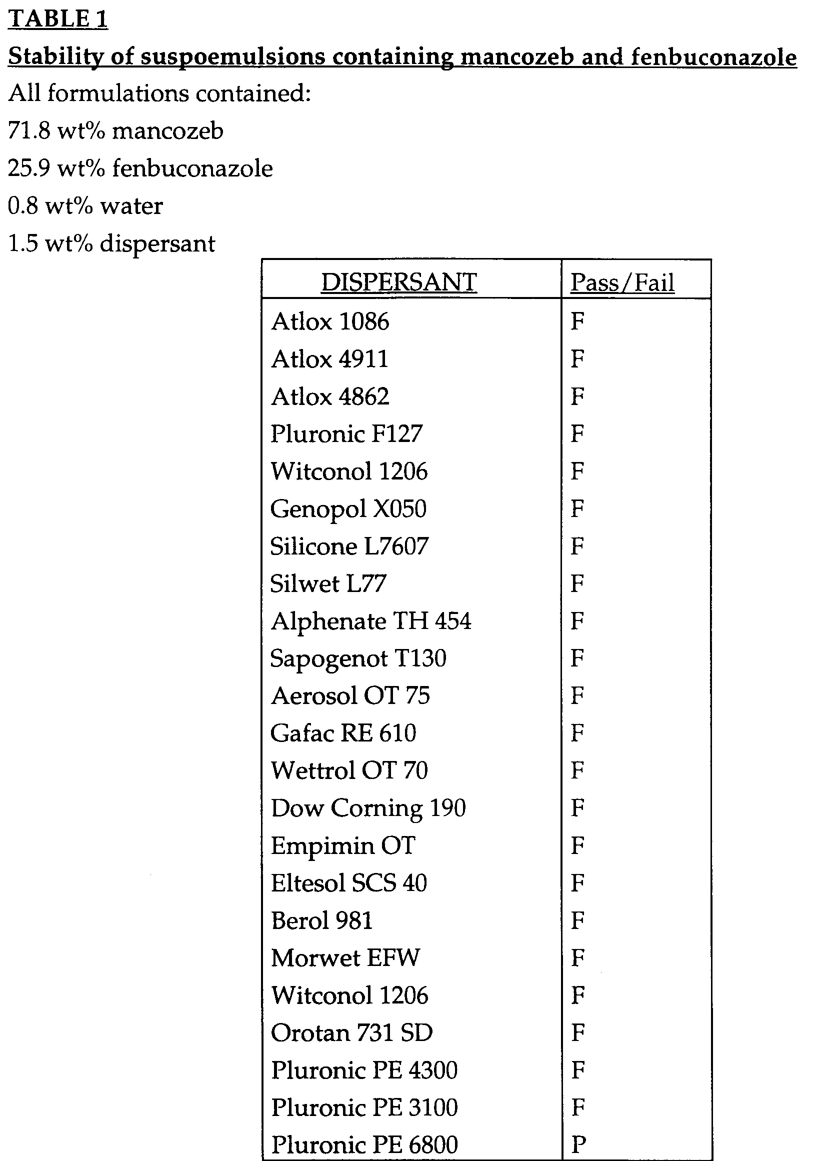

### EXAMPLE 3- Evaluation of Pluronic 6800

Pluronic 6800 was evaluated further, by examining suspoemulsions containing varying concentrations of that dispersant. These results are shown in Table 2. The parameters examined were the pH of the formulation, its viscosity, the percentage which formed a 'separation' phase between the top of the liquid and the suspended particles, and the gel strength, a measure of the thixotropic properties of the formulation. The suspoemulsions were stored at 54°C for two weeks, at which point gel strength was measured. A viscosity of under 1200cps and preferably under 1000cps was considered desirable, and a gel strength of less than 600 was considered indicative of a product that would remain stable for long periods at room temperature.

**TABLE 2**

| **Physical properties of suspoemulsions containing Pluronic PE 6800 as dispersant** | | | | | | | | | | |
|---|---|---|---|---|---|---|---|---|---|---|
| Dithane (wt%) | 72.0 | 72.0 | 72.0 | 72.0 | 72.0 | 63.2 | 63.2 | 63.2 | 63.2 | 63.2 |
| Indar (wt%) | 12.5 | 12.5 | 12.5 | 12.5 | 12.5 | 17.0 | 17.0 | 17.0 | 17.0 | 17.0 |
| Water (wt%) | 14.5 | 13.5 | 12.5 | 11.5 | 10.5 | 18.8 | 17.8 | 16.8 | 15.8 | 14.8 |
| Pluronic PE 6800 wt% | 1.0 | 2.0 | 3.0 | 4.0 | 5.0 | 1.0 | 2.0 | 3.0 | 4.0 | 5.0 |
| | | | | | | | | | | |
| % separation | 19 | 23 | 4.5 | 2.5 | 2.0 | 5 | 16 | 16 | 16 | 12 |
| Viscosity (cps) - 0 wks | 75 | 80 | 80 | 110 | 160 | 50 | 80 | 100 | 150 | 200 |
| Initial pH | 6.1 | 6.1 | 6.1 | 6.1 | 6.1 | 6.3 | 6.3 | 6.3 | 6.2 | 6.2 |
| Viscosity (cps) - 2 wks | 1200 | 410 | 380 | 300 | 310 | 550 | 200 | 180 | 200 | 220 |
| Gel strength (g. cm) | 380 | 160 | 170 | 140 | 170 | 180 | 0 | 0 | 0 | 0 |

The data in Table II shows that concentration of the dispersant is not critical for the properties of the suspoemulsion.

### AGRICULTURAL TESTING

As described above, in agriculture suspoemulsions have significant advantages over ordinary mixtures in cases where the mixtures have to be formulated immediately prior to application, both on grounds of ease of handling and safety. However it is also of course essential that the suspoemulsions show equivalent or similar disease control to ordinary mixtures. The trials described below examined the degree of disease control of suspoemulsions compared with tank mixtures of the same active ingredients.

Trials were carried out over a three-year period on commercial crops located in the main cereal-growing areas of Northern France. They covered a wide range of agronomic and climatic conditions and wheat varieties.

The overall experimentation was conducted under natural contamination according to the methods of the "Commission des Essais Biologiques" (**CEB**) of the "Association Nationale pour la Protection des Plantes" (**ANPP**) : Method No. 79 for *Septoria* *tritici/nodorum* and Method No. 73 for *Puccinia recondita* (Leaf Brown Rust).

The experimental design consisted in a randomised block including the control with four replicates. Plot size was 2m by 10m.

Applications were made using a Van der Weij "AZO" precision plot knapsack sprayer at a pressure of 3 bar and water volume of 300 1/ha, through 8 Teejet flat fan nozzles (code 8001) spaced 25cm apart on a 2m spray boom.

Application schedule was based on 2 sequential treatments at crop stages Zadoks 38 and 55. If necessary and depending on the year and the variety, a blanket treatment involving Sportak 45 was made at 1 l/ha (450 g ai Prochloraz) early in the season (stage Zadoks 30) in order to limit the risk of root diseases. In addition all trials received insecticide treatments according to the rest of the field.

When operating and taking into account the rate per ha, the exact quantity of product was placed and mixed in the tank with the relevant water volume before spraying.

For each appropriate foliar level, disease control was assessed 10-30 days after last application. For *Septoria sp.* and *Puccinia striiformis* (Yellow rust), the percentage infected area was estimated while for *Puccinia recondita* (Brown rust), the number of pustules was evaluated through frequency classes. For both diseases sample size was 25 leaves per individual plot. In addition crop yield was operated with an experimental combine harvester in trials that provided sufficient disease pressure. From around 10 m collected per plot, yield was expressed in hundreds of kg/ha.

The results are summarized in Tables 3 and 4.

Table 3 concerns the work carried out on the suspoemulsion containing fenbuconazole and mancozeb compared to a tank mixture of fenbuconazole (as an emulsifiable concentrate containing 50g/l fenbuconazole) and mancozeb (as a suspension concentrate containing 455g/l mancozeb).

Table 4 concerns the work carried out on the suspoemulsion containing fenbuconazole, fenpropidin and mancozeb compared to the tank mixture of fenbuconazole (as an emulsifiable concentrate containing 50g/l fenbuconazole), fenpropidin (as an emulsifiable concentrate containing 750g/l fenpropidin) and mancozeb (as a suspension concentrate containing 455g/l mancozeb).

The control achieved by the suspoemulsions are quite comparable to those obtained with the mixtures of the separate formulations of each active ingredient. These results demonstrate the optimal biological activity of the suspoemulsion formulations based on mancozeb.

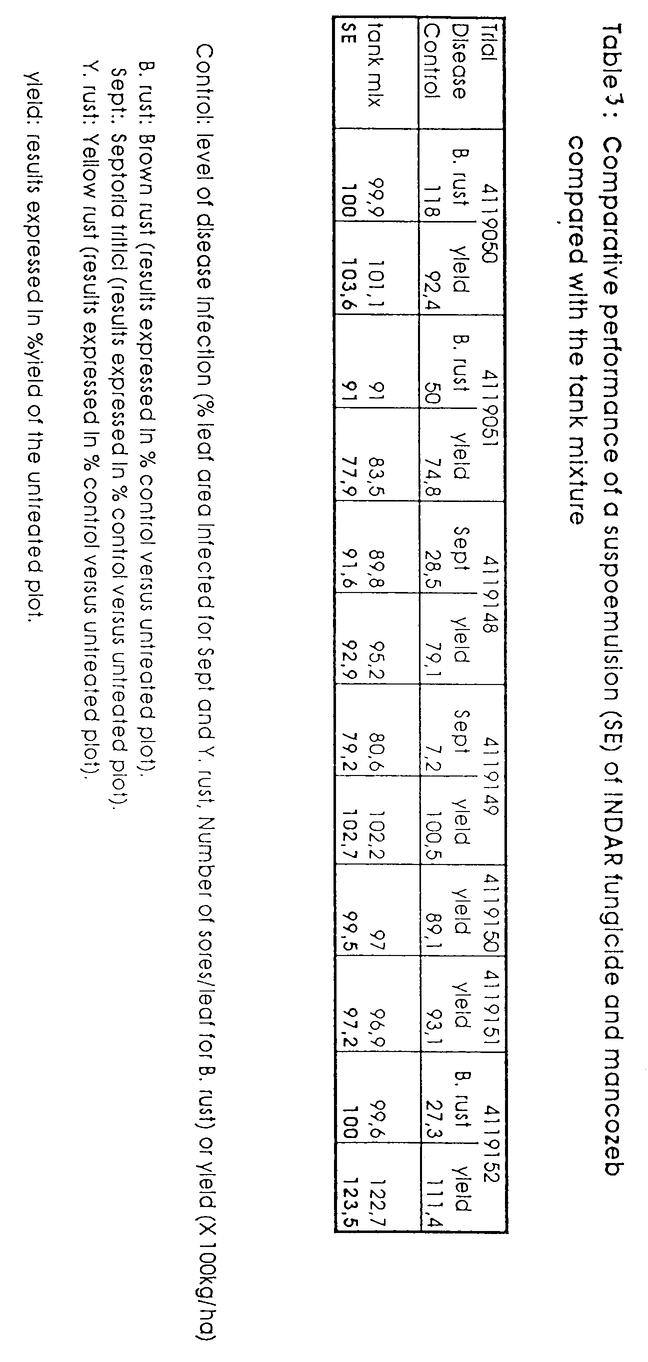

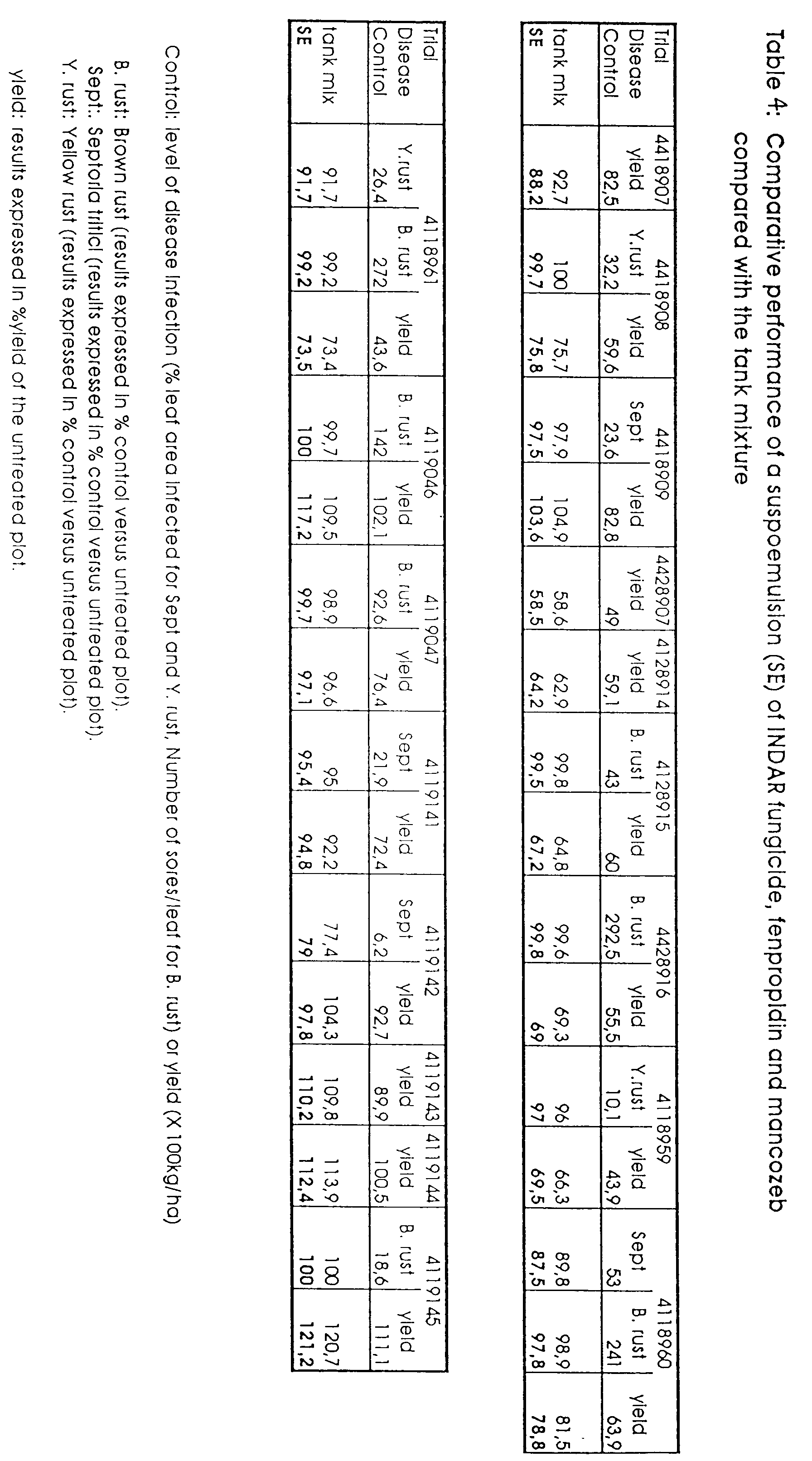

## Claims

1. Aqueous-based suspoemulsion comprising as suspended solid component a dithiocarbamate, and as emulsified component a triazole, morpholine or pyrimidine, characterised in that it also comprises a polymer of propylene oxide and ethylene oxide, the polymer having at least 40 mol% polyoxyethylene units, a central polyoxypropylene portion, and the formula HO(CH₂CH₂O)ₓ(CH(CH₃)CH₂O)_{y}(CH₂CH₂O)_{z}H, where x, y, and z are such that the molecular mass of said portion is at least 1200.

2. Suspoemulsion according to claim 1 wherein the polymer comprises 70-90 mol% polyoxyethylene units.

3. Suspoemulsion according to claim 2 wherein the polymer comprises approximately 80 mol% polyoxyethylene units.

4. Suspoemulsion according to any preceding claim wherein the polyoxypropylene portion of the polymer has a molecular mass of from 1500 to 2000.

5. Suspoemulsion according to claim 4 wherein the polyoxypropylene portion of the polymer has a molecular mass of approximately 1750.

6. Suspoemulsion according to any preceding claim wherein the dithiocarbamate is manganese ethylene bisdithiocarbamate (maneb) or its coordination product with zinc ion (mancozeb).

7. Suspoemulsion according to any preceding claim wherein the emulsified component comprises fenbuconazole and/or fenpropidin.

8. Suspoemulsion according to any preceding claim wherein the polymer is present in an amount of from 0.1 to 10% by weight of the suspoemulsion, more preferably from 1 to 5% by weight.

9. Suspoemulsion according to any preceding claim wherein the emulsified component is present at a concentration of from 1 to 100 g/l, preferably from 5 to 20 g/l.

10. Suspoemulsion according to any preceding claim wherein the dithiocarbamate is at a concentration of from 50 to 1000 g/l, preferably from 200 to 600 g/l.

11. Method of stabilising a suspoemulsion of dithiocarbamate as suspended solid component and triazole, morpholine or pyrimidine as emulsified component, comprising incorporating therewith a polymer of propylene oxide and ethylene oxide, the polymer having at least 40 mol% polyoxyethylene units, a central polyoxypropylene portion, and the formula HO(CH₂CH₂O)ₓ(CH(CH₃)CH₂O)_{y}(CH₂CH₂O)_{z}H, where x, y, and z are such that the molecular mass of said portion is at least 1200.
